# EUROPÄISCHE PATENTSCHRIFT

(11) **EP 2 563 849 B1**
(45) Veröffentlichungstag und Bekanntmachung des Hinweises auf die Patenterteilung: **05.11.2014**
(21) Anmeldenummer: 11714270.3
(22) Anmeldetag: 12.04.2011
(51) Int. Cl.: C08J 9/00, C08G 12/32

(54) **VERFAHREN ZUR HERSTELLUNG ELASTISCHER, KOMPRIMIERTER SCHAUMSTOFFE AUF BASIS VON MELAMIN/FORMALDEHYDHARZEN**
PROCESS FOR PRODUCTION OF ELASTOMERIC, COMPRESSED FOAMS BASED ON MELAMIN FORMALDEHYDE RESINS
PROCÉDÉ POUR LA PRODUCTION DES MOUSSES ÉLASTOMÉRIQUES ET COMPRIMÉES BASÉES SUR DES RÉSINES DE MÉLAMINE FORMALDÉHYDE

(30) Priorität: 29.04.2010 EP 10161398
(43) Veröffentlichungstag der Anmeldung: 06.03.2013
(73) Patentinhaber: BASF SE, 67056 Ludwigshafen (DE)
(72) Erfinder: STEINKE, Tobias Heinz, 67346 Speyer (DE); BAUMGARTL, Horst, 67063 Ludwigshafen (DE); NESSEL, Peter, 67067 Ludwigshafen (DE); HAHN, Klaus, 67281 Kirchheim (DE); SCHIERHOLZ, Jens-Uwe, 64625 Bensheim (DE); WESTER, Bettina, 67133 Maxdorf (DE); MÖCK, Christof, 68259 Mannheim (DE); VATH, Bernhard, 68259 Mannheim (DE); GONZALES, Denis Alfred, B-1150 Brüssel (BE); DE LEERSNYDER, Geert, B-8710 Wielsbeke (BE)
(86) Internationale Anmeldenummer: PCT/EP2011/055661
(87) Internationale Veröffentlichungsnummer: WO 2011/134778

(56) Entgegenhaltungen:
- EP-A1- 0 037 470
- EP-A1- 0 451 535
- WO-A1-03/074250
- WO-A1-03/095540
- US-A- 3 063 953
- DATABASE WPI Week 197018 Thomson Scientific, London, GB; AN 1970-31236R XP000002656359, & ZA 6 804 884 A (BRITISH IND PLASTICS LTD) 4. August 1967 (1967-08-04)

## Beschreibung

Die vorliegende Erfindung betrifft ein Verfahren zur Herstellung elastischer, komprimierter Schaumstoff auf Basis von Melamin/Formaldehydharzen.

Aus der WO-A-2007/031944, der EP-A-451 535, der EP-A-111 860 und der US-B-6 608 118 sind Verfahren bekannt, die das nachträgliche Komprimieren von Melamin/Formaldehyd-Schaumstoffen beschreiben.

Diese Verfahren und derartige Formteile lassen jedoch noch zu wünschen übrig.

Der vorliegenden Erfindung lag daher die Aufgabe zugrunde, den zuvor genannten Nachteilen abzuhelfen.

Demgemäß wurde ein neues und verbessertes Verfahren zur Herstellung elastischer, komprimierter Schaumstoff auf Basis von Melamin/Formaldehydharzen gefunden, welches dadurch gekennzeichnet ist, dass man ein Melamin/Formaldehydvorkondensat aufschäumt und den weichen, nicht ausgehärteten Melamin/Formaldehyd-Schaumstoff komprimiert und anschließend trocknet und gegebenenfalls tempert.

Das erfindungsgemäße Verfahren kann wie folgt durchgeführt werden:

Hierzu kann der Melaminharzschaum bei der Siedetemperatur eines Treibmittels gebildet werden. Der noch weiche, nicht ausgehärtete Melaminharzschaum kann anschließend nach allen dem Fachmann bekannten Methoden komprimiert werden. Als druckgebende Körper können beispielsweise Walzen oder Stempel eingesetzt werden. Anschließend wird der Melaminharzschaum getrocknet und gegebenenfalls getempert.

Die Komprimierung kann wahlweise im Bereich von 1 bis 90%, bevorzugt 5 bis 80%, besonders bevorzugt 10 bis 70 %, besonders bevorzugt 20 bis 60% bezogen auf die Ausgangshöhe (Schäumungshöhe) erfolgen. In Abhängigkeit von der Komprimierung liegen die Dichten der elastischen Schaumstoffe im Bereich von 5 bis100 g/l, bevorzugt 10 bis 50 g/l, besonders bevorzugt 12 bis 30 g/l.

Diese elastischen, komprimierten Melaminharz-Schaumstoffe weisen anisotropes Verhalten auf, also eine richtungsabhängige Mechanik (sog. Anisotropie).

Herstellverfahren für Melamin-/Formaldehydharze und deren Schäume sind beispielsweise aus WO-A-01/94436 bekannt.

Die erfindungsgemäßen Schäume und Formteile lassen sich wie folgt herstellen:
1. Herstellen einer Lösung oder Dispersion enthaltend ein Vorkondensat des herzustellenden Schaumstoffs und gegebenenfalls weitere Zusatzkomponenten (Z),
2. Aufschäumen des Vorkondensates durch Erhitzen der Lösung oder Dispersion aus Schritt (1) auf eine Temperatur oberhalb der Siedetemperatur des Treibmittels, um einen Schaumstoff zu erhalten,
3. Komprimierung des Schaumstoffs aus Schritt (2)
4. Aushärtung und Trocknung des in Schritt (3) erhaltenen Schaumstoffes

Durch das erfindungsgemäße Verfahren kann ohne einen nachträglichen Verfahrenschritt, während der Schaumherstellung (also in situ) komprimiert werden.

Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Diese Melamin/Formaldehyd-Kondensationsprodukte können neben Formaldehyd bis zu 50 Gew.-%, vorzugsweise bis 20 Gew.-% anderer Aldehyde ein kondensiert enthalten. Bevorzugt ist jedoch ein unmodifiziertes Melamin/Formaldehyd-Kondensationsprodukt.

Als Aldehyde können zum Beispiel Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

In einer weiteren bevorzugten Ausführungsform liegt das Melamin-/Formaldehyd-Vorkondensat in der Mischung in einer Menge von 55 bis 85 Gew.-%, bevorzugt von 63 bis 80 Gew.-% vor.

Es können bei der Herstellung des Melamin-/Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkohol-sulfate, Ethersulfate, a-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykol-ether, Fettsäurealkanolamide, Ethylenoxid/Propylenoxid-Blockcopolymere, Aminoxide, Glycerin-fettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-/Formaldehyd-Vorkondensat eingesetzt.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Prinzipiell können bei dem erfindungsgemäßen Verfahren sowohl physikalische als auch chemische Treibmittel verwendet werden (Encyclopedia of Polymer Science and Technology, Vol. I, 3. Aufl., Kapitel Additives, Seite 203 bis 218, 2003).

Als Treibmittel eignen sich "physikalische" oder "chemische" Treibmittel. Unter "physikalischen" Treibmitteln werden hier flüchtige Flüssigkeiten oder komprimierte Gase verstanden, die ihre Eigenschaft als Treibmittel durch physikalische Behandlung erhalten (z.B. Temperatur, Druck). Unter "chemischen" Treibmitteln werden hier solche Treibmittel verstanden, die ihre Eigenschaft als Treibmittel durch chemische Reaktion oder chemische Zersetzung unter Gasfreisetzung erhalten.

Als "physikalische" Treibmittel eignen sich, beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%. Bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80°C zugesetzt.

In einer weiteren Ausführungsform enthält die Mischung neben dem Melamin-/- Formaldehyd-Vorkondensat des herzustellenden Schaumstoffes, auch einen Emulgator sowie gegebenenfalls einen Härter und gegebenenfalls ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen Zusatzstoffen, wie Farbstoffe, Flammschutzmittel, UV-Stabilisatoren, Mittel zur Herabsetzung der Brandgastoxizität oder zur Förderung der Verkohlung zuzusetzen.

Es ist auch möglich, dem Melamin-/Formaldehyd-Vorkondensat Zusatzstoffe zuzusetzen. Die Schaumstoffe enthalten in einer Ausführungsform mindestens einen Zusatzstoff aus der Gruppe der Farbstoffe, Duftstoffe, optischen Aufheller, UV-Absorbern, Flammschutzmittel und Pigmente. Dieser Zusatzstoff ist bevorzugt homogen in dem Schaumstoff verteilt.

Als Pigmente können die gängigen anorganischen natürlichen (z.B. Kreide) oder synthetischen Pigmente (z.B. Titanoxide), aber auch organische Pigmente eingesetzt werden.

Als Flammschutzadditive eignen sich beispielsweise wie intumeszierende Massen, Alkalisilikate, Melamin, Melaminpolyphosphat, Melamincyanurat, Aluminiumhydroxid, Magnesiumhydroxid, Ammoniumpolyphosphate, organische Phosphate oder auch flammschützende Halogenverbindungen. Ebenso sind Weichmacher, Keimbildner, IR-Absorber wie Ruß und Graphit, Aluminiumoxidpulver oder Al(OH)₃, lösliche und unlösliche Farbstoffe, biozid wirksame Substanzen (wie Fungizide) und Pigmente als Additive geeignet.

Im Verfahrensschritt (2) erfolgt ein Erwärmen zum Aufschäumen des Vorkondensates und ggf. des Trägermaterials. Durch ein Erhitzen der Lösung oder Dispersion aus Schritt (1) auf eine Temperatur oberhalb des Siedepunktes des verwendeten Treibmittels, kann ein Schaumstoff erhalten werden. Die genau anzuwendende Temperatur hängt auch vom eingesetzten Treibmittel (z.B. von dessen Siedepunkt) ab. Das Erhitzen in Schritt (2) kann z.B. durch die Verwendung heißer Gase (wie Luft oder Inertgase) und/oder eine Hochfrequenzbestrahlung (z. B. Mikrowellen) erfolgen.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Das Komprimieren des schäumfähigen Melamin-/Formaldehydharzes kann nach allen dem Fachmann bekannten Methoden erfolgen. Als druckgebende Körper können beispielsweise Walzen oder Stempel eingesetzt werden.

In einer bevorzugten Ausführungsform kann man den komprimierten Melamin-/- Formaldehydharzschaum bevorzugt diskontinuierlich herstellen.

Hierzu kann der aus Schritt (2) erhaltene flexible, noch nicht ausgehärtete Melamin-/- Formaldehydharzschaum in einem Schaumkasten mit variablen Druckeinstellungen mit Hilfe eines Stempels und ggf. einem Füllkörper (zur Fixierung der Dichte) auf die gewünschte Dichte komprimiert werden.

In einer weiteren bevorzugten Ausführungsform kann die Komprimierung des Melamin-/Formaldehydharzschaumes bevorzugt in einem kontinuierlichen Verfahren erfolgen, so dass das zuvor geschäumte Melaminharz direkt komprimiert wird.

Hierzu kann der aus Schritt (2) erhaltene flexible, noch nicht ausgehärtete Melamin-/- Formaldehydharzschaum beispielsweise mittels einer Walze, die an der Oberseite des Schäumkanals befestigt ist, komprimiert werden. Alternativ sind auch mehrere hintereinander geschaltete Walzen, Doppellaufbänder oder Kalander möglich. Ebenso kann die Komprimierung von der Oberseite mit einer Komprimierung von den Seiten und/oder der Unterseite des Schäumkanals kombiniert werden.

Die hergestellten Schaumstoffe werden abschließend getrocknet, wobei im Schaumstoff verbliebenes Wasser und Treibmittel entfernt wird.

Die Eigenschaften des dabei hergestellten Melamin-/Formaldehydharzschaumes ergeben sich aus dem eingesetzten schäumfähigen Melamin-Formaldehyd-Harz und der eingestellten Rohdichte des Trägermaterials.

Die erfindungsgemäßen Melaminharzschäume finden Anwendung in der Bepolsterung von Sitzflächen, als Wärme-, Kälte- und/oder Schallschutz bzw. Dämmung bzw. Isolierung von Gebäuden und Gebäudeteilen, insbesondere von Wänden, Zwischenwänden, Dächern, Fassaden, Türen, Decken und Fußböden, von Fahrzeugen aller Art zu Land, zu Wasser, in der Luft und im All sei es zur Lasten- oder zur Personenbeförderung oder einer derartigen Kombination in Personenkraftwagen, Lastkraftwagen, z.B. zur Isolierung des Motorraumes (wie Motorhauben) oder Fahrgastzellen, beim Schienenverkehr in den Wagons im Güter oder Personenverkehr sowie in Lokomotiven, in Luftfahrzeugen z.B. im Kabineninnenraum, dem Cockpit oder im Frachtraum sowie in der Raumfahrt in bemannten oder unbemannten Flugobjekten wie Raumschiffen und Raumgleitern, Raumkapseln oder Satelliten, zur Tieftemperaturisolierung z.B. von Kühlaggregaten, Kühlschränken, Kühlhäusern, Tankanlagen und Behälter für beliebige Flüssigkeiten, insbesondere für Öl und Gas bzw. Flüssiggas bis -278°C, zur Lagerung und im Transport, zur Aufnahme und reversible oder teilreversiblen Abgabe von Flüssigkeiten bis -278°C als "Schwamm", in der Reinigungsindustrie für in der Reinigung von Flächen z.B. in Form von Schwämmen oder getränkt mit Reinigungsmitteln aller Art u.a. für Waschvorgänge in Wasch(voll)automaten, als Stoßdämmendes oder Stoßdämpfendes Verpackungsmaterial, in Hygieneanwendungen (Windeln, Binden) sowie im Textilbereich (Kleidung).

### Beispiele

### Beispiel 1

75 Gew.-Teile eines sprühgetrockneten Melamin/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C₁₂/C₁₈-Alkansulfats, 20 Gew.-% Pentan, jeweils bezogen auf das Harz, zugesetzt, gerührt und anschließend in einer Form (zum Schäumen) aus Polypropylen durch Einstrahlung von Mikrowellenenergie verschäumt. Der flexible Schaumstoff wird mit Hilfe eines Stempels aus Polypropylen auf die Hälfte des Ausgangsvolumens komprimiert und 30 Minuten getrocknet.

### Vergleichsbeispiel A

75 Gew.-Teile eines sprühgetrockneten Melamin/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C₁₂/C₁₈-Alkansulfats, 20 Gew.-% Pentan, jeweils bezogen auf das Harz, zugesetzt, gerührt, anschließend in einer Form (zum Schäumen) aus Polypropylen durch Einstrahlung von Mikrowellenenergie verschäumt und 30 Minuten getrocknet

### Vergleichsbeispiel B (analog US-B-6,608,118, Beispiel 1)

75 Gew.-Teile eines sprühgetrockneten Melamin/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C₁₂/C₁₈-Alkansulfats, 20 Gew.-% Pentan, jeweils bezogen auf das Harz, zugesetzt, gerührt, anschließend in einer Form (zum Schäumen) aus Polypropylen durch Einstrahlung von Mikrowellenenergie verschäumt und 30 Minuten getrocknet

Aus den Ausgangsmaterialien hergestellt nach Beispiel 1 bzw. den Vergleichsbeispielen A und B wurden jeweils eine Rechteckplatte mit den Abmessungen 200 x 200 x 40 mm in einer elektrisch beheizten und temperaturgeregelten hydraulischen Plattenpresse in Richtung der kürzesten Raumkoordinate bei 270°C und 4 bar für 3 min auf die Hälfte des Ausgangsvolumens komprimiert.

Die Ergebnisse sind in Tabelle 1 zusammengestellt.

**Tabelle 1**

| | Dichte [g/l] | Stempeldruck¹⁾ [N/kN] | Zugfestigkeit [kPa], EN ISO 1798 | Bruchdehnung [%], EN ISO 1798 |
|---|---|---|---|---|
| Beispiel 1 | 18,2 | | | |
| horizontal | | 57,2 | 176,7 | 21,8 |
| vertikal | | 35,1 | 57,8 | 46,4 |
| Vergleichsbeispiel A | 8,9 | | | |
| horizontal | | 28,2 | 125,2 | 21,3 |
| vertikal | | 26,7 | 123,6 | 22,5 |
| Vergleichsbeispiel B | 18,1 | | | |
| horizontal | | 43,2 | 143,9 | 14,7 |
| vertikal²⁾ | | - | - | - |

| | | | | |
|---|---|---|---|---|
| ¹⁾ Stempeldruckwerte wurden jeweils auf der größeren Fläche des Probenkörpers bestimmt ²⁾ Diese Werte können infolge der Geometrie des Probenkörpers nicht bestimmt werden. | | | | |

Der Melaminharzschaum aus Beispiel 1 zeigt eine Anisotropie der mechanischen Eigenschaften.

Die horizontalen Schnitte (orthogonal zur Schäumrichtung und Komprimierung) aus Beispiel 1 besitzen deutlich höhere Stempeldruck- und Zugfestigkeitswerte im Vergleich zum nicht komprimierten Schaum (Vergleichsbeispiel A) und dem nachträglich komprimierten Schaum (Vergleichsbeispiel B). Die Bruchdehnung ist vergleichbar mit dem nicht-komprimierten Melaminharzschaum.

Die vertikalen Zuschnitte (entlang der Schäumrichtung und Komprimierung) aus Beispiel 1 zeigen deutlich niedrigere Werte im Vergleich zu den horizontalen Schnitten aus Beispiel 1. Dagegen hat sich die Bruchdehnung des vertikalen Schnitts aus Beispiel 1 im Vergleich zum horizontalen Schnitt aus Beispiel 1 mehr als verdoppelt. (46,4%). Dagegen zeigt das Vergleichsbeispiel A ein nahezu isotropes Verhalten, d.h. zwischen horizontalem und vertikalem Schnitt gibt es kaum Unterschiede.

### Stempeldruckmessung

Zur Beurteilung der mechanischen Güte der Melaminharzschaumstoffe wurde eine Stempeldruckmessung gemäß US-A-4 666 948 durchgeführt. Dabei wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90°C gedrückt bis die Probe reißt. Die Durchreißkraft [N/kN] gibt Auskunft über die Güte des Schaumstoffs.

## Patentansprüche

1. Verfahren zur Herstellung elastischer, komprimierter Schaumstoffe mit anisotropen mechanischen Eigenschaften auf Basis von Melamin/Formaldehydharzen, **dadurch gekennzeichnet, dass**
in einem Schritt (1) das Herstellen einer Lösung oder Dispersion enthaltend ein unmodifiziertes Melamin/Formaldehydvorkondensat des herzustellenden Schaumstoffs und gegebenenfalls weitere Zusatzkomponenten (Z) erfolgt,
in einem Schritt (2) das Aufschäumen des unmodifizierten Melamin/Formaldehydvorkondensats durch Erhitzen der Lösung oder Dispersion aus Schritt (1) auf eine Temperatur oberhalb der Siedetemperatur des Treibmittels, um einen Schaumstoff zu erhalten, erfolgt,
in einem Schritt (3) die Komprimierung des weichen, nicht ausgehärteten Melamin/Formaldehyd-Schaumstoffs aus Schritt (2) erfolgt, und
in einem Schritt (4) die Aushärtung und Trocknung des in Schritt (3) erhaltenen Schaumstoffs erfolgt.

2. Verfahren zur Herstellung elastischer, komprimierter Schaumstoffe mit anisotropen mechanischen Eigenschaften auf Basis von Melamin/Formaldehydharzen nach Anspruch 1, **dadurch gekennzeichnet, dass** man den weichen, nicht ausgehärteten Melamin/Formaldehyd-Schaumstoff auf 1 bis 99% der Schäumungshöhe komprimiert.

3. Verfahren zur Herstellung elastischer, komprimierter Schaumstoffe mit anisotropen mechanischen Eigenschaften auf Basis von Melamin/Formaldehydharzen nach Anspruch 1 oder 2, **dadurch gekennzeichnet, dass** man den weichen, nicht ausgehärteten Melamin/Formaldehyd-Schaumstoff auf 5 bis 80% der Schäumungshöhe komprimiert.

4. Verfahren zur Herstellung elastischer, komprimierter Schaumstoffe mit anisotropen mechanischen Eigenschaften auf Basis von Melamin/Formaldehydharzen nach Anspruch 1, **dadurch gekennzeichnet, dass** die Dichte der Melamin/Formaldehyd-Schaumstoffe 10 bis 100 g/l beträgt.

5. Verwendung der Schäume, herstellbar nach einem der Ansprüche 1 bis 4 als Polsterung, zum Wärme-, Kälte- und Schallschutz und für Reinigungsschwämme.

6. Verwendung der Schäume, herstellbar nach einem der Ansprüche 1 bis 4 im Fahrzeugbau für PKW, LKW, Busse, Land- und Baumaschinen, Schienenfahr zeugen und im Bau von Luft- und Raumfahrzeugen.

7. Verwendung der Schäume, herstellbar nach einem der Ansprüche 1 bis 4 in Paneelen im Fahrzeugbau für PKW, LKW, Busse, Land- und Baumaschinen, Schienenfahrzeugen und im Bau von Luft- und Raumfahrzeugen.

## Claims

1. A process for producing resilient compressed foamed materials having anisotropic mechanical properties on the basis of melamine-formaldehyde resins, which comprises a step (1) of preparing a solution or dispersion comprising an unmodified melamine-formaldehyde precondensate of the foamed material to be produced and optionally further added components (Z), a step (2) of foaming the unmodified melamine-formaldehyde precondensate by heating the solution or dispersion from step (1) to a temperature above the boiling point of the blowing agent to obtain a foamed material, a step (3) of compressing the soft, uncured melamine-formaldehyde foamed material from step (2), and a step (4) of curing and drying the foamed material obtained in step (3).

2. The process for producing resilient compressed foamed materials having anisotropic mechanical properties on the basis of melamine-formaldehyde resins according to claim 1 wherein the soft, uncured melamine-formaldehyde foamed material is compressed to from 1 to 99% of the height of rise.

3. The process for producing resilient compressed foamed materials having anisotropic mechanical properties on the basis of melamine-formaldehyde resins according to claim 1 or 2 wherein the soft, uncured melamine-formaldehyde foamed material is compressed to from 5 to 80% of the height of rise.

4. The process for producing resilient compressed foamed materials having anisotropic mechanical properties on the basis of melamine-formaldehyde resins according to claim 1 wherein the density of the melamine-formaldehyde foamed materials is in the range from 10 to 100 g/l.

5. The use of the foams obtainable according to any one of claims 1 to 4 as cushioning, for heat, cold and/or sound protection and for cleaning sponges.

6. The use of the foams obtainable according to any one of claims 1 to 4 in vehicle construction for passenger cars, trucks, coaches, agricultural and building machines, track vehicles and in the construction of aerospace vehicles.

7. The use of the foams obtainable according to any one of claims 1 to 4 in panels in vehicle construction for passenger cars, trucks, coaches, agricultural and building machines, track vehicles and in the construction of aerospace vehicles.

## Revendications

1. Procédé pour la production de mousses comprimées, élastiques, à propriétés mécaniques anisotropes, à base de résines mélamine/formaldéhyde, **caractérisé en ce que**
dans une étape (1) s'effectue la préparation d'une solution ou dispersion contenant un produit de précondensation mélamine/formaldéhyde non modifié de la mousse à produire et éventuellement d'autres composants additifs (Z),
dans une étape (2) s'effectue le moussage du produit de précondensation mélamine/formaldéhyde non modifié, par chauffage de la solution ou dispersion provenant de l'étape (1) jusqu'à une température supérieure à la température d'ébullition de l'agent porogène, afin d'obtenir une mousse,
dans une étape (3) s'effectue la compression de la mousse de mélamine/formaldéhyde molle, non durcie, provenant de l'étape (2), et
dans une étape (4) s'effectuent le durcissement et le séchage de la mousse obtenue dans l'étape (3).

2. Procédé pour la production de mousses comprimées, élastiques, à propriétés mécaniques anisotropes, à base de résines mélamine/formaldéhyde selon la revendication 1, **caractérisé en ce qu'**on comprime la mousse de mélamine/formaldéhyde molle, non durcie, jusqu'à 1 à 99 % de l'épaisseur de la mousse.

3. Procédé pour la production de mousses comprimées, élastiques, à propriétés mécaniques anisotropes, à base de résines mélamine/formaldéhyde selon la revendication 1 ou 2, **caractérisé en ce qu'**on comprime la mousse de mélamine/formaldéhyde molle, non durcie, jusqu'à 5 à 80 % de l'épaisseur de la mousse.

4. Procédé pour la production de mousses comprimées, élastiques, à propriétés mécaniques anisotropes, à base de résines mélamine/formaldéhyde selon la revendication 1, **caractérisé en ce que** la densité des mousses de mélamine/formaldéhyde vaut de 10 à 100 g/l.

5. Utilisation des mousses, pouvant être produites selon l'une quelconque des revendications 1 à 4, en tant que rembourrage, pour la protection contre la chaleur, le froid et le bruit et pour des éponges de nettoyage.

6. Utilisation des mousses, pouvant être produites selon l'une quelconque des revendications 1 à 4, dans la construction de véhicules pour automobiles, camions, autobus, machines agricoles et de génie civil, véhicules sur rail et dans la construction d'aéronefs et de véhicules spatiaux.

7. Utilisation des mousses, pouvant être produites selon l'une quelconque des revendications 1 à 4, dans des panneaux dans la construction de véhicules pour automobiles, camions, autobus, machines agricoles et de génie civil, véhicules sur rail et dans la construction d'aéronefs et de véhicules spatiaux.
